Europäisches Patentamt

European Patent Office

Office européen des brevets

(11) Veröffentlichungsnummer: **0 309 757**
**A1**

(12) **EUROPÄISCHE PATENTANMELDUNG**

(21) Anmeldenummer: 88114244.2

(22) Anmeldetag: 01.09.88

(51) Int. Cl.⁴: **G11B 17/035 , G11B 17/032 ,**
**G11B 15/675**

(30) Priorität: 30.09.87 DE 3732940

(43) Veröffentlichungstag der Anmeldung:
**05.04.89 Patentblatt 89/14**

(84) Benannte Vertragsstaaten:
**AT BE CH DE ES FR GB GR IT LI LU NL SE**

(71) Anmelder: **Deutsche Thomson-Brandt GmbH**
**Hermann-Schwer-Strasse 3 Postfach 1307**
**D-7730 Villingen-Schwenningen(DE)**

(72) Erfinder: **Baas, Dieter**
**Sofienstrasse 10**
**D-7640 Kehl(DE)**

(54) **Ein/Auszugsvorrichtung für einen Aufzeichnungsträger.**

(57)    2.1 Bei CD-Spielern sind z.B. Ein/Auszugsvorrichtungen mit einem ortsfesten (1) und einem ausfahrbaren Teil (2) für eine Kassette, eine sogeannte Cartrigde, bekannt, bei denen zum Messen der Wegstrecken beim Ein- und Auszug der Kassette eine Lichtschranke vorgesehen ist.

2.2 Um den technischen Aufwand der Ein/Auszugsvorrichtung zur verringern und gleichzeitig sicheren Betrieb zu gewährleisten, sind am ausfahrbaren Teil (2) eine erste und eine zweite Nase (3, 4) zur Betätigung eines Schalters (5) vorgesehen, der am ortsfesten Teil (1) angebracht ist. Der Ein- und Auszug des ausfahrbaren Teils (2) wird durch die Schaltzustände des Schalters (5) gesteuert.

2.3 CD-Spieler, Plattenspieler, Kassettengeräte, Videoplattenspieler.

Fig. 1

EP 0 309 757 A1

## Ein/Auszugsvorrichtung für einen Aufzeichnungsträger

Die Erfindung betrifft eine Ein/Auszugsvorrichtung für einen Aufzeichnungsträger mit einem ortsfesten und einem ausfahrbaren Teil.

Derartige Ein Auszugsvorrichtungen sind z.B. bei CD-Spielern anzutreffen, in die eine Kassette mit einer CD-Platte, eine sogenannte Cartridge, eingelegt werden kann. Mittels der Ein Auszugsvorrichtung wird die Kassette automatisch eingezogen und nach Abspielen der CD-Platte wieder ausgefahren. Es ist bereits bekannt, zur Steuerung des automatischen Ein- und Auszugs der Kassette eine Lichtschranke vorzusehen, mit der die ein- und ausgefahrene Wegstrecke gemessen wird. Diese Lösung ist aber wegen der Lichtschranke aufwendig und teuer.

Es ist daher Aufgabe der Erfindung, eine Ein/Auszugsvorrichtung anzugeben, die ohne großen technischen Aufwand mit einfachen Mitteln einen sicheren Betrieb gewährleistet.

Diese Aufgabe wird dadurch gelöst, daß am ausfahrbaren Teil eine erste und eine zweite Nase zur Betätigung eines Schalters vorgesehen sind, der am ortsfesten Teil angebracht ist, und daß der Ein- und Auszug des ausfahrbaren Teils durch die Schaltzustände des Schalters gesteuert wird.

Es zeigen

Figur 1 ein Ausführungsbeispiel der Erfindung im ausgefahrenen Zustand ·

Figur 2 beim Einzug

Figur 3 kurz vor der Endstellung im eingefahrenen Zustand

Figur 4 in der Endstellung im eingefahrenen Zustand.

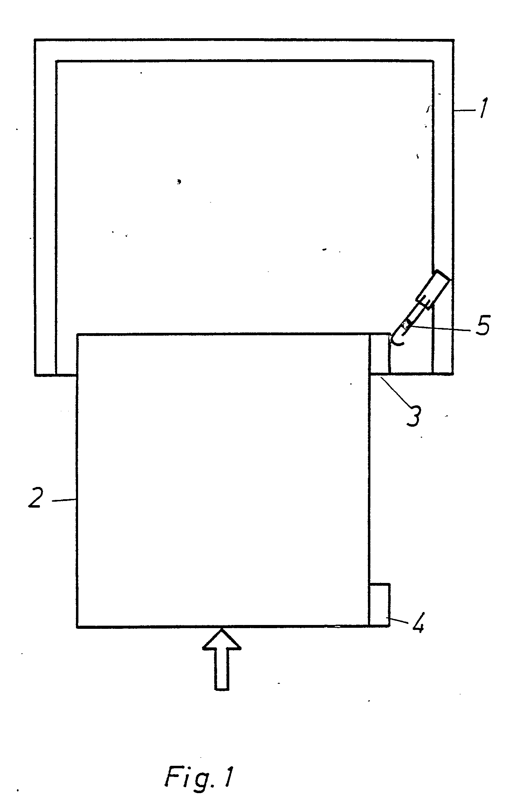

Anhand der Figuren 1 bis 4 wird nun die Erfindung beschrieben und erläutert.

Die Figuren 1 bis 4 zeigen den ortsfesten Teil 1 und den ausgefahrenen Teil 2 der Einzugsvorrichtung. Auf der einen Seite des ausfahrbaren Teils 2 sind eine erste und eine zweite Nase 3 und 4 angebracht, die einen Schalter 5 betätigen, der beispielsweise, wie aus den Figuren ersichtlich ist, als einfacher und billig herzustellender Federkontakt ausgeführt sein kann.

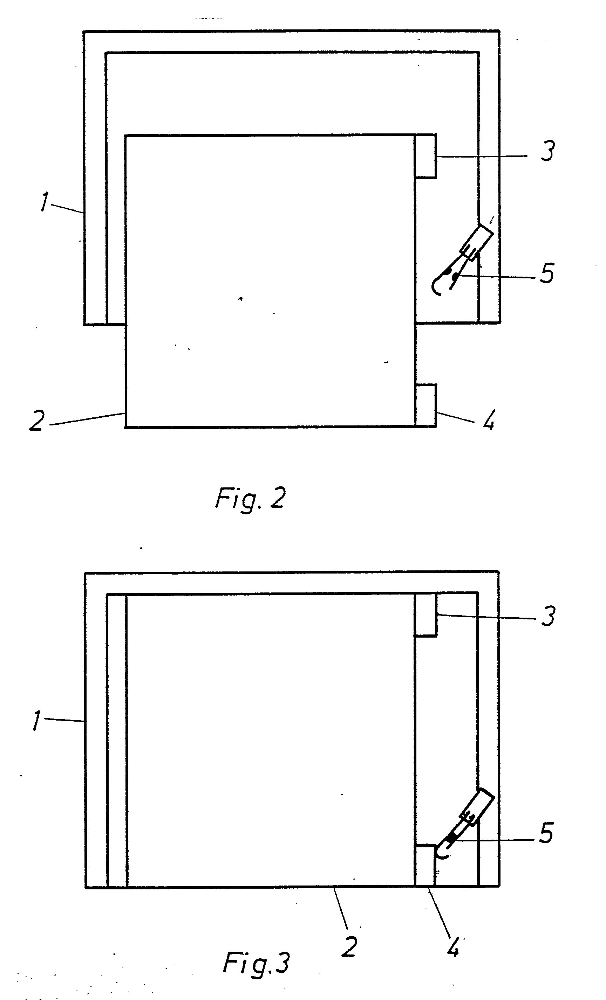

In der Figur 1, die den ausgefahrenen Zustand zeigt, ist der Schalter 5 durch die erste Nase 3 geschlossen. Durch Eindrücken des ausfahrbaren Teils 2 von Hand gibt die erste Nase 3 den Schalter 5 frei, der dadurch geöffnet wird. Sobald der Schalter 5 geöffnet ist, wird der ausfahrbare Teil 2 automatisch eingezogen und gleichzeitig abgesenkt, damit die eingelegte Kassette mit dem Plattenantrieb für die CD-Platte verbunden wird. Diese Phase des Einzugs zeigt Figur 2.

Der ausfahrbare Teil 2 wird nun soweit eingezogen, bis die zweite Nase 4 den Schalter 5 schließt. Diese Phase des Einzugs ist in Figur 3 dargestellt.

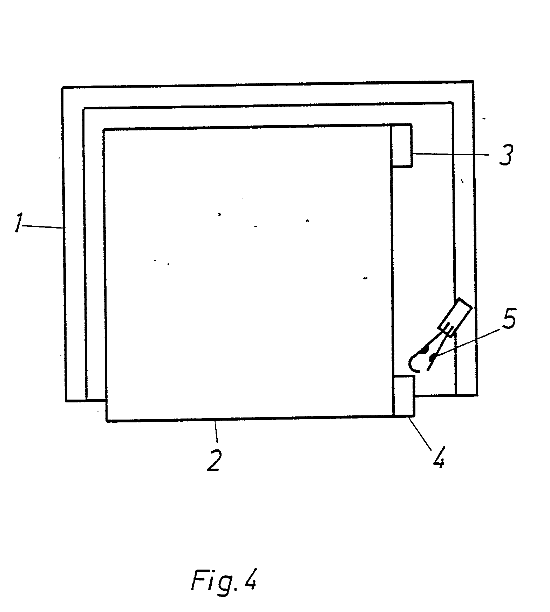

Anschließend wird der ausfahrbare Teil 2 soweit ausgefahren, bis die zweite Nase 4 den Schalter 5 freigibt und dadurch wieder öffnet. In diesem Zustand, der in Figur 4 abgebildet ist, wird die CD-Platte abgespielt.

Möchte der Bediener eine andere CD-Platte einlegen, so wird der ausfahrbare Teil 2 so weit ausgefahren, bis die erste Nase 3 den Schalter 5 schließt.

Weil an der Reihenfolge der Schaltzustände des Schalters 5 eindeutig erkennbar ist, in welcher Phase sich der ausfahrbare Teile 2 befindet, läßt sich der Ein- und Auszug einer Kassette mit einer CD-Platte mittels eines Mikroprozessors auf einfache Art und Weise steuern. Teure Einzelteile wie z.B. Photodiode und Photosensor für eine Lichtschranke und deren Stromversorgung werden nicht benötigt. Statt dessen genügt ein einfach und billig herstellbarer Federkontakt, der als Schalter dient.

## Ansprüche

1. Ein/Auszugsvorrichtung für einen Aufzeichnungsträger mit einem ortsfesten (1) und einem ausfahrbaren Teil (2), **dadurch gekennzeichnet**, daß am ausfahrbaren Teil (2) eine erste und eine zweite Nase (3, 4) zur Betätigung eines Schalters (5) vorgesehen sind, der am ortsfesten Teil (1) angebracht ist, und daß der Ein- und Auszug des ausfahrbaren Teils (2) durch die Schaltzustände des Schalters (5) gesteuert wird.

2. Ein/Auszugsvorrichtung nach Anspruch 1, **dadurch gekennzeichnet**, daß der Schalter (5) im ausgefahrenen Zustand des ausfahrbaren Teils (2) von der ersten Nase (3) in dem einen Schaltzustand gehalten wird, daß durch manuelles Eindrükken des ausgefahrenen ausfahrbaren Teils (2) um eine vorgebbare Wegstrecke die erste Nase (3) den Schalter (5) frei gibt, so daß er in den anderen Schaltzustand übergeht, worauf der ausfahrbare Teil (2) eingezogen wird, bis die zweite Nase (4) den Schalter (5) in den einen Schaltzustand bringt, und daß anschließend der ausfahrbare Teil (2) so weit ausgefahren wird, bis die zweite Nase (4) den Schalter (5) frei gibt, so daß er in den anderen Schaltzustand übergeht, und daß beim Ausfahren der ausfahrbare Teil (2) so weit ausgefahren wird, bis die erste Nase (3) den Schalter (5) in den einen Schaltzustand bringt.

3. Ein/Auszugsvorrichtung nach Anspruch 2, **dadurch gekennzeichnet**, daß es sich bei dem einen Schaltzustand um den geschlossenen und bei dem anderen Schaltzustand um den offenen Zustand des Schalters (5) handelt.

4. Ein/Auszugsvorrichtung nach Anspruch 1, 2 oder 3, **dadurch gekennzeichnet**, daß der ausfahrbare Teil (2) während des Ausfahrens um eine vorgebbare Wegstrecke angehoben wird, damit der Aufzeichnungsträger von seinem Antrieb getrennt wird, und daß der ausfahrbare Teil (2) beim Einzug um die gleiche vorgebbare Wegstrecke gesenkt wird, damit der Aufzeichnungsträger mit seinem Antrieb verbunden wird.

5. Ein/Auszugsvorrichtung nach Anspruch 1, 2, 3 oder 4, **dadurch gekennzeichnet**, daß die Schaltzustände des Schalters (5) von einem Mikroprozessor ausgewertet werden, der den Einzug und den Auszug des ausfahrbaren Teils (2) steuert.

*Fig. 1*

Fig. 2

Fig.3

Fig. 4

| | Europäisches Patentamt | **EUROPÄISCHER RECHERCHENBERICHT** | Nummer der Anmeldung |

## EINSCHLÄGIGE DOKUMENTE

EP 88114244.2

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | PATENT ABSTRACTS OF JAPAN, unexamined applications, P Field, Vol. 11, Nr. 29, 28. Jänner 1987 THE PATENT OFFICE JAPANESE GOVERNMENT Seite 84 P 540 * Kokai-Nr. 61-199 265 (CANON INC) * -- | 1,2 | G 11 B 17/035 G 11 B 17/032 G 11 B 15/675 |
| A | EP - A2 - 0 174 629 (NIPPON GAKKI SEIZO K.K.) * Fig. 1; Seite 12, Zeilen 12-20 * -- | 1,2,3, 4 | |
| A | DE - A1 - 3 705 007 (SONY CORP.) * Fig. 1,3; Ansprüche 1-5; Zusammenfassung * ---- | 1,2,4 | |

RECHERCHIERTE SACHGEBIETE (Int. Cl.4)

G 11 B 15/00

G 11 B 17/00

Der vorliegende Recherchenbericht wurde für alle Patentansprüche erstellt.

| Recherchenort | Abschlußdatum der Recherche | Prüfer |
|---|---|---|
| WIEN | 28-12-1988 | BERGER |